# EUROPÄISCHE PATENTSCHRIFT

(11) **EP 2 237 740 B1**
(45) Veröffentlichungstag und Bekanntmachung des Hinweises auf die Patenterteilung: **20.06.2018**
(21) Anmeldenummer: 09704143.8
(22) Anmeldetag: 26.01.2009
(51) Int. Cl.: A61C 13/00

(54) **VERFAHREN ZUM MODELLIEREN EINES INDIVIDUELLEN ZAHNERSATZES**
METHOD FOR MODELING AN INDIVIDUAL DENTAL PROSTHESIS
PROCÉDÉ DE MODÉLISATION D'UNE PROTHÈSE DENTAIRE INDIVIDUELLE

(30) Priorität: 25.01.2008 DE 102008006048
(43) Veröffentlichungstag der Anmeldung: 13.10.2010
(60) Teilanmeldung: 18156707.4
(73) Patentinhaber: Straumann Holding AG, 4002 Basel (CH)
(72) Erfinder: HOLZNER, Stephan, 82069 Hohenschäftlarn (DE); WEBER, Gerhard, 86932 Pürgen (DE)
(74) Vertreter: Grünecker Patent- und Rechtsanwälte PartG mbB
(86) Internationale Anmeldenummer: PCT/EP2009/000478
(87) Internationale Veröffentlichungsnummer: WO 2009/092613

(56) Entgegenhaltungen:
- EP-A- 1 062 916
- EP-A- 1 568 335
- EP-A- 1 618 854
- EP-A- 1 662 414
- US-A- 4 742 464
- US-A1- 2002 037 489
- US-A1- 2003 219 148
- US-B1- 6 382 975

## Beschreibung

Die Erfindung betrifft Verfahren zum Modellieren eines individuellen Zahnersatzes, Verfahren zum Herstellen eines individuellen Zahnersatzes, Systeme zum Modellieren eines individuellen Zahnersatzes sowie computerlesbare Medien und ein Verfahren zur automatischen Ermittlung einer Einschubrichtung für ein Zahnersatzteil.
Aus dem Stand der Technik ist es bekannt, einen Restzahnbereich nach der zahnärztlichen Präparation durch optische Abtastung direkt im Patientenmund oder durch optische Abtastung eines Modells, das die Situation im Mund des Patienten darstellt, zu vermessen. Weiterhin ist es bekannt, Modelle von Zahnersatzteilen digital zu modellieren, wobei Scandaten des Restzahnbereichs berücksichtigt werden.
Weiterhin ist es nach der EP 1 062 916 A2 bekannt, ein Arbeitsmodell einer Kieferabformung herzustellen, in welches je nach herzustellendem Zahnersatz ein oder mehrere Manipulierimplantate eingearbeitet werden, die die Position der Implantate im Kiefer wiedergeben. Da die Manipulierimplantate nicht oder kaum aus dem Arbeitsmodell herausragen, wird auf jedem Manipulierimplantat ein Hilfselement angebracht, das aus dem Arbeitsmodell ragt. Die Hilfselemente geben Einsatztiefe, Längsachsenausrichtung und Winkelstellung der Manipulierimplantate im Arbeitsmodell wieder. Mit erfassten Daten der Geometrie des Arbeitsmodells mit aufgesetzten Hilfskörpern sollen sich weitere Daten ermitteln lassen, die für die vollautomatische Herstellung sowie für die Ermittlung der Einschubrichtung der weiteren Bestandteile des individuellen Zahnersatzes benötigt werden. US 2003/219148 A1 offenbart ein Verfahren und ein Computersystem nach dem Oberbegriff von Ansprüchen 1 und 7. Aufgabe der vorliegenden Erfindung ist, ein Verfahren zum Modellieren eines individuellen Zahnersatzes, ein Verfahren zum Herstellen eines individuellen Zahnersatzes und ein System zum Modellieren eines individuellen Zahnersatzes zur Verfügung zu stellen, so dass ein oder mehrere verbessertere Datensätze bei der Modellierung von Zahnersatz zur Verfügung steht, was zu gut herstellbarem Zahnersatz führt.
Zudem ist es Aufgabe der vorliegenden Erfindung, ein Verfahren zur automatischen Ermittlung einer Einschubrichtung für ein Zahnersatzteil zur Verfügung zu stellen, so dass sich eine Zeitersparnis bei der Ermittlung der Einschubrichtung im Vergleich zur Ermittlung der Einschubrichtung durch einen Anwender ergibt.
Diese Aufgabe wird gelöst mit einem Verfahren nach Anspruch 1 und einem Computersystem nach Anspruch 7.
Bevorzugte Ausführungsformen sind in den abhängigen Ansprüchen offenbart.
Bei einem Verfahren zum Modellieren eines individuellen Zahnersatzes, der ein Abutment umfasst, wird in einem Modell eines Restzahnbereichs, der mit dem Zahnersatz versehen werden soll, mindestens ein Manipulierimplantat angebracht, das einem Implantat im Restzahnbereich entspricht.
In dem Modell kann auf jedem Manipulierimplantat ein Hilfselement angebracht werden, das zusammen mit dem Manipulierimplantat die Lage des Implantats im Restzahnbereich wiedergibt. Mittels einer Erfassungsvorrichtung kann eine erste dreidimensionale Geometrie des Modells mit dem mindestens einen Hilfselement erfasst und daraus ein erster Datensatz ermittelt werden, welcher die erste dreidimensionale Geometrie beschreibt.
Mittels der Erfassungseinrichtung kann eine zweite dreidimensionale Geometrie des Modells mit dem mindestens einen Manipulierimplantat jedoch ohne das Hilfselement erfasst werden, und daraus kann ein zweiter Datensatz ermittelt werden, welcher die zweite dreidimensionale Geometrie beschreibt. Die zweite Geometrie kann auch vor Erfassung der ersten Geometrie erfasst werden.
Wird das Modell eines Restzahnbereichs ohne aufgesetzte Hilfselemente erfasst, so können mögliche Abschattungen durch den Hilfskörper vermieden werden. Ist ein Hilfskörper auf ein Manipulierimplantat aufgesetzt, so kann es, je nach Lage des Hilfskörpers, dessen Lage auch durch die Lage des Manipulierimplantats bestimmt wird, dazu kommen, dass gewisse Bereiche beispielsweise einer Zahnlücke nicht durch die Erfassungseinrichtung erfasst werden können. Dies kann nachteilig sein, wenn z. B. eine Außenform des Abutments festgelegt werden soll, da dann die entsprechende Form nicht definiert werden kann. Ohne aufgesetztes Hilfselement kann der gesamte Bereich beispielsweise der Zahnlücke erfasst werden und entsprechend eine Außenform des Abutments definiert werden.

Beispielsweise kann die Außenform des Abutments anhand durch eines vorhandenen Abstands zu Nachbarzähnen, die im gleichen und/oder gegenüberliegenden Kiefer (Ober- bzw. Unterkiefer) liegen und/oder anhand der Form bzw. der Achsen der Nachbarzähne definiert werden. Weiterhin können auch Außenformen gängiger Abutments als Vorschläge, beispielsweise parametrisiert, zur Verfügung stehen, und beispielsweise kann ein solcher Vorschlag für eine Definition einer Außenform des (herzustellenden) Abutments verwendet werden. Die zur Verfügung stehenden Außenformen gängiger Abutments können verändert und/oder bearbeitet werden, so dass die sich ergebende Außenform beispielsweise für das (herzustellende) Abutment verwendet werden kann. Die Außenformen gängiger Abutments können nach verschiedenen Zahntypen und/oder verschiedenen Anschlußgeometrien der Abutments an ein Implantat klassifiziert sein, wodurch sich eine einfache und/oder schnelle Auswahl einer Außenform eines gängigen Abutments als Vorschlag für ein (herzustellendes) Abutment ergeben kann.

Bei den Hilfskörpern sind im allgemeinen große Hilfskörper bevorzugt, da bei diesen die geometrische Form und Position mit besonders geringen Fehlern erkannt werden kann. Gerade solche großen Hilfskörper erzeugen auch große Abschattungen, die jedoch gerade ungewünscht sind.

Unter Benutzung des zweiten Datensatzes kann eine Einschubrichtung ermittelt werden, unter der ein Zahnersatzteil auf das Abutment geschoben werden soll. Die Einschubrichtung des Zahnersatzteils kann beispielsweise durch die Außenform des Abutments und/oder durch benachbarte Zähne bedingt sein, sodass sich das Zahnersatzteil gut in die Zielposition einschieben lassen kann. Als Außenform des Abutments ist hierbei die Fläche des Abutments zu verstehen, die zum aufzusetzenden Zahnersatzteil hin weist. Die Ermittlung der Einschubrichtung aus dem zweiten Datensatz kann selbst vor Erfassung des ersten Datensatzes erfolgen, da bei der Ermittlung der Einschubrichtung, unter der ein Zahnersatzteil auf das Abutment geschoben werden soll, vorzugsweise der zweite Datensatz benutzt werden kann, jedoch der erste Datensatz nicht benutzt wird. Auch die Reihenfolge der Erfassung der beiden Datensätze ist beliebig.

Die Außenform eines Abutments kann beispielsweise unter Einbeziehung einer zuvor ermittelten Einschubrichtung definiert werden, wobei es nicht erforderlich ist, dass das Abutment zum Zeitpunkt der Ermittlung der Einschubrichtung bereits teilweise oder ganz bekannt oder ermittelt ist.

Die Ermittlung der Einschubrichtung kann sich beispielsweise auf verschiedene Achsen stützen, die implizit oder explizit vom erfassten Datensatz umfasst sind. Dabei kann es sich beispielsweise um die Achsen der Nachbarzähne handeln und/oder die Senkrechte einer Fläche, die vorgegeben wird durch die U-Form des Ober- bzw. Unterkiefers und/oder durch die Äquatorfläche der benachbarten Zähne, wobei die Äquatorfläche durch den größten horizontalen Umfang eines Zahns festgelegt werden kann. Ein weiteres Kriterium kann sein, dass eine geschlossene Zahnlinie erhalten wird.

Der zweite Datensatz beruht auf der Geometrie des Modells des Restzahnbereichs mit mindestens einem Manipulierimplantat auf dem kein Hilfselement aufgesetzt ist. Daher können Abschattungen durch Hilfselemente vermieden werden und eine Einschubrichtung des Zahnersatzteils kann beispielsweise unter Beachtung der benachbarten Zähne bestimmt werden.

Unter Benutzung des ersten Datensatzes und des zweiten Datensatzes zur Ermittlung einer Einschubrichtung unter der ein Zahnersatzteil auf das Abutment geschoben werden kann, können die Vorteile, welche die Informationen beider Datensätze enthalten, kombiniert werden. Mittels des ersten Datensatzes kann die Lage des Manipulierimplantats im Modell des Restzahnbereichs und somit die Lage des Implantats im Restzahnbereich eines Patienten durch den aufgesetzten Hilfskörper genau bestimmt werden, und mittels des zweiten Datensatzes kann gewährleistet werden, dass alle Bereiche des Modells des Restzahnbereichs im Datensatz wiedergegeben sind und nicht, dass wie beispielsweise im ersten Datensatz gewisse Bereiche des Modells des Restzahnbereichs durch ein Hilfselement verdeckt werden.

Die Lage des Manipulierimplantats kann auch die Einschubrichtung, unter der das Zahnersatzteil auf das Abutment geschoben werden kann, beeinflussen. Das Abutment, das vom Zahnersatzteil umfasst wird, kann auf das Manipulierimplantat aufgebracht werden. Zudem kann vorgesehen sein, dass das Abutment mit dem Manipulierimplantat beispielsweise mittels einer Schraube verbunden wird. Um dies zu gewährleisten, kann eine bestimmte Form des Abutments vorgesehen sein, die es erlaubt, einen Schraubenkanal in solcher Weise zur Verfügung zu stellen, dass eine Schraube in stabiler Weise durch das Abutment hindurch mit dem Manipulierimplantat verbunden werden kann. Das Abutment kann dazu in gewissen Bereichen eine notwendige Materialdicke aufweisen, die eine solche stabile Verbindung gewährleistet, wobei die Außenform des Abutments, die auch die Materialdicke bestimmen kann, wiederum so gewählt werden kann, dass das Abutment in den Modell des Restzahnbereichs, beispielsweise eine Zahnlücke problemlos eingebracht werden kann. Die Außenform des Abutments sowie die Umgebung des Restzahnbereichs um das Abutment herum, d.h. beispielsweise Nachbarzähne einer Zahnlücke, können für die Einschubrichtung des Zahnersatzteils auf das Abutment bestimmend sein.

Mittels des zweiten Datensatzes können, wie bereits weiter oben beschrieben, mögliche Abschattungen durch den Hilfskörper vermieden werden. Ohne aufgesetztes Hilfselement kann der gesamte Bereich, beispielsweise der Zahnlücke, erfasst werden und entsprechend eine Außenform des Abutments definiert werden.

Das Zahnersatzteil kann beispielsweise ein Overlay, ein Onlay, ein Käppchen, eine Krone, eine Primärkrone, eine Sekundärkrone, eine Brücke oder ein Gerüst sein oder umfassen.

Das Verfahren kann zudem einen Schritt des Ermittelns von Abutmentdaten, die das Abutment definieren, umfassen. Der Schritt des Ermittelns von Abutmentdaten kann die Ermittlung einer Anschlussgeometrie des Abutments an das Implantat im Restzahnbereich umfassen. Bei mehreren Implantaten, die zum Befestigen beispielsweise einer Brücke vorgesehen sind, ist es vorteilhaft, wenn das Implantat in seiner oberen Form, auf der das Abutment aufgesetzt werden soll, rotationssymmetrisch ist, um die Dentalversorgung nicht geometrisch überzubestimmen. Auch oder stattdessen kann das Abutment in seiner Außenform, auf die das Zahnersatzteil aufgesetzt wird, rotationssymmetrisch sein.

Ist jedoch ein Implantat vorgesehen, auf das lediglich ein einzelnes Zahnersatzteil, wie eine Krone oder Ähnliches, aufgesetzt werden soll, so ist es vorteilhaft, wenn das Implantat im entsprechenden Bereich nicht rotationssymmetrisch ist, um so ein Verdrehen des Zahnersatzteils zu verhindern. Entsprechend ist es dann vorteilhaft, wenn auch das entsprechende Abutment in dem entsprechenden Teil, der mit dem Implantat in Kontakt kommt nicht rotationssymmetrisch ist. Weiter ist aber auch vorteilhafterweise das Abutment in seiner Außenform, die mit dem Zahnersatzteil in Kontakt kommt, nicht rotationssymmetrisch.

Zur Bestimmung der Anschlussgeometrie des Abutments an das Implantat kann eine im Rechner vorab gespeicherte Information über die benötigte/gewünschte Geometrie des Abutments im Anschlussbereich und/oder über die Geometrie des Implantats im Anschlussbereich verwendet werden. Eine vorabgespeicherte Information kann auch für die Erstellung eines Schraubenkanals (s.u.) verwendet werden.

Unter Verwendung des ersten und/oder des zweiten Datensatzes kann eine Richtung bestimmt werden, unter der das Abutment auf das Implantat aufgesetzt werden kann. Diese Richtung kann durch benachbarte Zähne wie auch durch die Lage des Implantats festgelegt werden. Die Richtung, unter der das Abutment auf das Implantat aufgesetzt werden kann, kann, auch bei Einzelzahnversorgungen, verschieden zu der Einschubrichtung des Zahnersatzteils auf das Abutment sein. Richtung und Einschubrichtung können aber auch gleich sein.

In dem Abutment kann ein Schraubenkanal modelliert werden, wobei die Längsachse des Schraubenkanals einer Achse des Implantats im Restzahnbereich entspricht, wobei hierfür vorzugsweise unter anderem oder ausschließlich auf den ersten Datensatz zurückgegriffen werden kann. Der zweite Datensatz kann optional auch zusätzlich verwendet werden.

Weiterhin kann mit geeigneter Software überprüft werden, ob eine Schraube in den Schraubenkanal des Abutments eingesetzt werden kann, wenn das Abutment auf das Implantat im Restzahnbereich oder auf das Manipulierimplantat im Modell aufgesetzt ist. Die Überprüfung kann beispielsweise auch unter Verwendung des zweiten Datensatzes erfolgen.

Die Überprüfung der Einsetzbarkeit der Schraube in den Schraubenkanal kann die Verwendung des Abutments gewährleisten, da beispielsweise der Schraubenkanal sonst durch einen benachbarten Zahn verdeckt sein könnte und es daher nicht möglich wäre, das Abutment mittels Schraube auf dem Implantat zu befestigen. Es müsste dann ein neues Abutment hergestellt werden. Durch die Überprüfung kann, wenn nötig, ein neues Abutment entworfen werden, bevor es hergestellt wird.

Eine Außenform des Abutments kann mittels des zweiten Datensatzes bestimmt werden. Der zweite Datensatz beschreibt die Geometrie des Modells mit dem mindestens einem Manipulierimplantat auf das kein Hilfselement aufgesetzt ist. Dadurch, dass keine Hilfselemente verwendet werden, treten keine Abschattungsprobleme bei der Erfassung einer beispielsweise bestehenden Zahnlücke, in der sich das Manipulierimplantat befindet, auf. Die Außenform des Abutments kann entsprechend bestimmt werden, so dass beispielsweise ein aufzusetzendes Zahnersatzteil ausreichend Platz in der Zahnlücke findet.

Die Aufsetzbarkeit des Abutments auf das Implantat im Restzahnbereich kann überprüft werden. Dadurch kann gewährleistet werden, dass beispielsweise sowohl die Richtung, unter der das Abutment auf das Implantat aufgesetzt werden soll, wie auch die Außenform des Abutments mit den Gegebenheiten des Restzahnbereichs in Einklang stehen. Die Überprüfung der Aufsetzbarkeit des Abutments kann beispielsweise auch im Modell des Restzahnbereichs erfolgen.

Unter Berücksichtigung der Außenform des Abutments kann eine Innenform des Zahnersatzteils bestimmt werden. Als Innenform des Zahnersatzteils ist hierbei die Fläche des Zahnersatzteils zu verstehen, die zum Abutment hin weist. Bei der Bestimmung der Innenform des Zahnersatzteils können auch Bereiche für das Einbringen von Zement oder Klebstoff vorgesehen werden, wobei Zement oder Klebstoff als Verbindungsmitte! von Abutment und Zahnersatzteil dienen können.

In einem Verfahren zum Herstellen eines individuellen Zahnersatzes, der ein Abutment umfasst, kann die Herstellung des Abutments und/oder des Zahnersatzteils mittels Fräsens aus einem vorkonfektionierten Rohling, aus einem beliebig geformten Rohling wie etwa einer Platte erfolgen. Beim Fräsen kann beispielsweise ein Stahl- oder ein Diamantfräser eingesetzt werden.

Die Rohlinge können durchgesinterte, vorgesinterte (zwar bereits gesinterte, aber noch nicht durchgesinterte) und ungesinterte (Grünlinge) Keramiken oder eines der im Folgenden aufgeführten Materialien sein oder umfassen.

Als Werkstoffe für das Abutment und/oder das Zahnersatzteil können Metall, Keramik, Glas oder Kunststoff verwendet werden. Dabei kann beispielsweise Kunststoff oder (glas)faserverstärkter Kunststoff zum Einsatz kommen wie auch Metall oder Metalllegierungen, wie beispielsweise, Kobaltlegierung, Chromkobaltlegierung, Titan oder Titanlegierung, Gold oder Goldlegierung. Zudem kann Keramik, wie beispielsweise Zirkonoxid, yttriumstabilisiertes Zirkonoxid oder Aluminiumoxid, verwendet werden.

In einem System zum Modellieren eines individuellen Zahnersatzes, der ein Abutment umfasst, sind Mittel vorgesehen, um einen ersten Datensatz zu erfassen, der eine erste dreidimensionale Geometrie beschreibt, wobei diese Geometrie ein Modell eines Restzahnbereichs, der mit einem Zahnersatz versehen werden soll, sowie mindestens ein Manipulierimplantat, auf dem ein Hilfselement angebracht ist, umfasst und um einen zweiten Datensatz zu erfassen, der eine zweite dreidimensionale Geometrie beschreibt, wobei diese Geometrie das Modell des Restzahnbereichs, der mit einem Zahnersatz versehen werden soll, sowie mindestens ein Manipulierimplantat, auf dem kein Hilfselement angebracht ist, umfasst. Unter Benutzung des zweiten Datensatzes, jedoch vorzugsweise ohne Benutzung des ersten Datensatzes, oder unter Benutzung des ersten Datensatzes und des zweiten Datensatzes kann eine Einschubrichtung ermittelt werden, unter der ein Zahnersatzteil auf das Abutment geschoben werden kann. Die Vorrichtung kann also so ausgebildet sein, dass selbst aus einem Datensatz, der keine Daten von Hilfskörpern umfasst, eine Einschubrichtung ermittelt werden kann.

Die erfassten Datensätze können zudem gespeichert, weiterverarbeitet und/oder mittels Datenfernübertragung versand werden.

Die Erfindung betrifft auch einen computerlesbaren Datenträger, der Instruktionen umfasst, die eines der obigen oder weiter unten beschriebenen Verfahren durchführen, wenn sie in einen Computer eingelesen werden.

Bei einem Verfahren zum Modellieren eines individuellen Zahnersatzes, der ein Abutment umfasst, wird auf einem, mehreren oder jedem Implantat, das sich in einem Restzahnbereich eines Patienten befindet, der mit einem Zahnersatz versehen werden soll, ein Hilfselement angebracht, das zusammen mit dem Implantat die Lage des Implantats im Restzahnbereich wiedergibt. Mittels einer Erfassungsvorrichtung kann eine erste dreidimensionale Geometrie des Restzahnbereichs mit dem mindestens einen Hilfselement erfasst und
Mittels der Erfassungseinrichtung kann eine zweite dreidimensionale Geometrie des Restzahnbereichs mit dem mindestens einen Implantat jedoch ohne das Hilfselement erfasst werden, und daraus kann ein zweiter Datensatz ermittelt werden, welcher die zweite dreidimensionale Geometrie beschreibt. Die zweite Geometrie kann auch vor Erfassung der ersten Geometrie erfasst werden.
Die Verfahrensschritte der Ansprüche 1 bis 6 sowie die weiter oben oder unten beschriebenen Verfahrensschritte können entsprechend mit diesen erfassten Datensätzen durchgeführt werden, wobei zu beachten ist, dass statt des Modells des Restzahnbereichs und Manipulierimplantaten der Restzahnbereich selbst und Implantate verwendet werden.
Die Erfindung betrifft zudem ein Verfahren zur automatischen Ermittlung einer Einschubrichtung für ein Zahnersatzteil.
Von Zähnen oder Zahnfleischerhebungen, die sich in einem Kieferbogen befinden, in dem sich ein Restzahnbereich befindet, der mit dem Zahnersatz versehen werden soll, können drei am weitesten vom Kiefer abstehende Punkte ausgewählt werden. Durch diese drei Punkte kann eine Ebene gelegt werden, deren Senkrechte die Einschubrichtung festlegen kann. Unter einem Kieferbogen wird hierbei der Oberkiefer bzw. der Unterkiefer eines Patienten verstanden.
Ein Kieferbogen kann in einen Schneidezahnbereich und in die zwei Backenzahnbereiche unterteilt werden, wobei in den drei Bereichen jeweils ein am weitesten vom Kiefer abstehender Punkt ausgewählt werden und durch diese drei Punkte eine Ebene gelegt werden kann, deren Senkrechte die Einschubrichtung festlegen kann. Eine Unterteilung in die drei Bereiche kann auch erfolgen, wenn nicht mehr alle und/oder keine Zähne mehr vorhanden sind, wobei dann für die Unterteilung die Bereiche verwendet werden können, in denen Schneide- und/oder Backenzähne vorhanden sein sollten.
Die Bereiche der Eckzähne können zu dem Schneidezahnbereich und/oder zu den jeweiligen Backenzahnbereichen hinzugenommen werden. Es ist aber auch möglich, für den Bereich der Eckzähne eigene Bereiche vorzusehen und/oder die Eckzähne bzw. die Bereiche der Eckzähne nicht zu berücksichtigen.

Von Zähnen und Zahnfleischerhebungen, die sich in einem Kieferbogen befinden, können drei vom Kiefer abstehende Punkte ausgewählt werden, wobei:
a) als ein erster Punkt, der am weitesten vom Kiefer abstehende Punkt ausgewählt wird;
b) als ein zweiter Punkt, der am zweitweitesten vom Kiefer abstehende Punkt ausgewählt wird, wenn der zweite Punkt zum ersten Punkt einen Mindestabstand aufweist, wobei der Mindestabstand 1 cm, 1,5 cm, 2 cm , 2,5 cm oder mehr beträgt;
c) wenn der Abstand von dem ersten und dem zweiten Punkt kleiner als der Mindestabstand ist, wird der zweite Punkt verworfen und die Schritte b) und c) werden wiederholt, bis ein zweiter Punkt ausgewählt wurde, wobei in den Schritten b) und c) jeweils der Punkt verwendet wird, der weniger weit als die zuvor verwendeten Punkte vom Kiefer absteht;
d) wenn entsprechend b) ein zweiter Punkt ausgewählt wurde, wird ein dritter Punkt ausgewählt, wenn der dritte Punkt zum ersten Punkt und zum zweiten Punkt jeweils den Mindestabstand aufweist, wobei als dritter Punkt ein Punkt verwendet wird, der weniger weit als die zuvor verwendeten Punkte vom Kiefer absteht;
e) wenn die Abstände zwischen dem dritten und dem ersten und/oder dem dritten und dem zweiten Punkt kleiner als der Mindestabstand sind, so wird der dritte Punkt verworfen und die Schritte d) und e) werden wiederholt, bis ein dritter Punkt ausgewählt wurde, wobei in den Schritten d) und e) jeweils der Punkt verwendet wird, der weniger weit als die zuvor verwendeten Punkte vom Kiefer absteht;
f) wenn drei Punkte ausgewählt wurden, durch diese drei Punkte eine Ebene gelegt wird, deren Senkrechte die Einschubrichtung festlegt.

An die Kanten eines beschliffenen Zahns und/oder an die Kanten eines Abutments, der und/oder das sich in einem Restzahnbereich befindet, der mit dem Zahnersatz versehen werden soll, können drei oder mehr Tangenten gelegt werden, durch die ein Kegelmantel um den beschliffenen Zahn und/oder das Abutment festgelegt werden kann, wobei der Öffnungswinkel des Kegels einen Winkelbereich für die Einschubrichtung definieren kann.

In dem Restzahnbereich kann sich ein weiterer beschliffener Zahn und/oder ein weiteres Abutment befinden, der und/oder das mit einem weiteren oder demselben Zahnersatz versehen werden soll, wobei an den weiteren beschliffenen Zahn und/oder an das weitere Abutment drei weitere oder mehr Tangenten gelegt werden können, durch die ein weiterer Kegelmantel um den weiteren beschliffenen Zahn und/oder das weitere Abutment festgelegt werden kann, wobei sich ein Winkelbereich für die Einschubrichtung aus einer Schnittmenge der beiden Öffnungswinkel der beiden Kegel ergeben kann.

Eine Richtung einer Achse eines beschliffenen Zahns und/oder eines Abutments zusammen mit einem Implantat, der und/oder das sich in einem Restzahnbereich befindet und der mit dem Zahnersatz versehen werden soll, kann die Einschubrichtung definieren.

Die Richtung der Achse des beschliffenen Zahns und/oder des Abutments zusammen mit dem Implantat kann aus Volumendaten des beschliffenen Zahns und/oder des Abutments zusammen mit dem Implantat bestimmt werden.

Die Richtung der Achse kann der Richtung der längsten Linie innerhalb des beschliffenen Zahns und/oder des Abutments zusammen mit dem Implantat entsprechen und/oder die Richtung der Achse kann einer Projektionsrichtung in der das Volumen des beschliffenen Zahns und/oder des Abutments zusammen mit dem Implantat bei der Projektion auf eine Ebene eine kleinstmögliche Fläche aufweist entsprechen.

Die Richtung der Achse des beschliffenen Zahns kann einer Senkrechten durch eine Äquatorfläche des beschliffenen Zahns entsprechen, wobei die Äquatorfläche durch einen größten horizontalen Umfang des beschliffenen Zahns definiert sein kann.

Eine Äquatorlinie des beschliffenen Zahns kann mit einem Kreis, einer Ellipse und/oder einem Polygon gefittet werden, und die Richtung der Achse kann der Senkrechten der Kreis-, Ellipsen- und/oder Polygonebene entsprechen, wobei die Äquatorlinie durch einen größten horizontalen Umfang des beschliffenen Zahns gegeben sein kann.

Die Richtung der Achse des beschliffenen Zahns kann einer Senkrechten durch eine Fläche, die durch eine Präparationslinie des beschliffenen Zahns gegeben ist, definiert werden.

Eine Präparationslinie eines beschliffenen Zahns kann mit einem Kreis, einer Ellipse und/oder einem Polygon gefittet werden, und die Richtung der Achse des beschliffenen Zahns kann der Senkrechten der Kreis-, Ellipsen- und/oder Polygonebene entsprechen.

Die Einschubrichtung des Zahnersatzteils kann definiert werden unter Berücksichtigung von Seitenflächen von benachbarten Zähnen, die an einen Restzahnbereich, der mit dem Zahnersatz versehen werden soll, anschließen, wobei nur die Seitenflächen berücksichtigt werden, die dem Zahnersatz zugewandt sind.

Ein Anwender kann die automatisch ermittelte Einschubrichtung auswählen, modifizieren, speichern und/oder die modifizierte Einschubrichtung auswählen und/oder speichern.

Ausführungsformen der Erfindung sollen anhand der beiliegenden Figuren erläutert werden. Dabei zeigt:
- Figur 1:: Modell eines Restzahnbereichs mit Manipulierimplantat und mit Hilfselement;
- Figur 2:: Modell eines Restzahnbereichs mit Manipulierimplantat ohne Hilfselement;
- Figur 3:: Restzahnbereich des Patienten mit Implantat und Hilfselement;
- Figur 4:: Restzahnbereich des Patienten mit Implantat ohne Hilfselement;
- Figur 5:: Modell eines Restzahnbereichs mit Manipulierimplantat und aufgesetztem Abutment;
- Figur 6:: Modell eines Restzahnbereichs mit zwei Manipulierimplantaten, zwei Abutments und einem Zahnersatzteil;
- Figur 7:: System zum Modellieren eines individuellen Zahnersatzes
- Figur 8:: schematische Darstellung eines Kieferbogens mit Zahnlücke;
- Figur 9:: Ablaufdiagramm für die Auswahl von vom Kiefer abstehender Punkte;
- Figur 10:: Bestimmung von Einschubrichtung aus Schnittmenge von Öffnungswinkeln von Kegeln;
- Figur 11:: schematische Darstellung einer Äquatorlinie eines Zahns mit gefittetem Kreis.

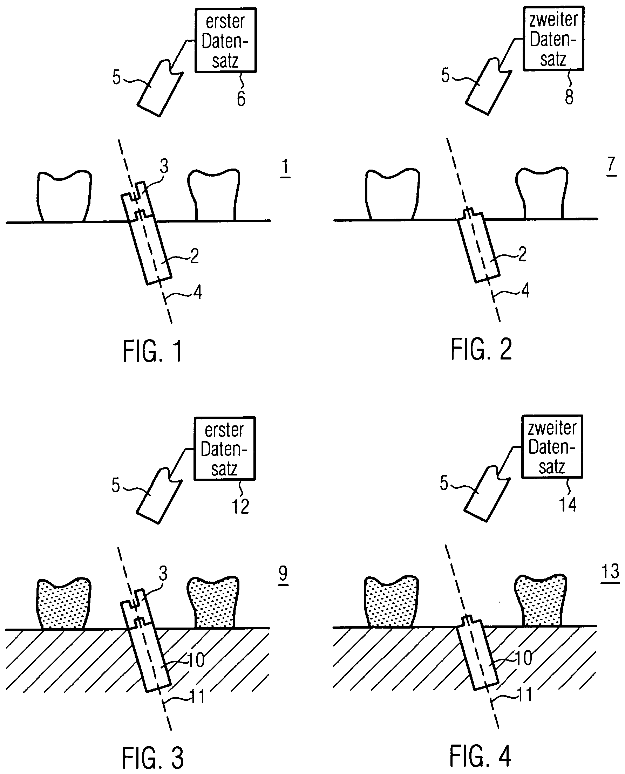

In Figur 1 ist ein Modell eines Restzahnbereichs 1 dargestellt, das mehrere Zähne sowie ein Manipulierimplantat 2 mit einem aufgesetzten Hilfselement 3 umfasst. Das Manipulierimplantat 2 kann relativ zum Modell 1 die Lage einnehmen, die der Lage eines entsprechenden Implantats 10 im Kiefer eines Patienten entspricht. Die Längsachse 4 des Manipulierimplantats kann der Ausrichtung der Längsachse 11 des Implantats im Patientenmund entsprechen. Das Hilfselement 3 kann zusammen mit dem Manipulierimplantat 2 die Lage des Implantats 10 im Kieferbereich wiedergeben.

Eine Geometrie dieses Modells des Restzahnbereichs 1 kann mit einer Erfassungsvorrichtung 5, beispielsweise mit einem Scanner, ermittelt werden. Ein Datensatz 6 dieser Geometrie kann zudem weitergeleitet, verarbeitet oder gespeichert werden.

Das Hilfselement 3 kann eine charakteristische Form aufweisen, die in dem Datensatz 6 gut erkannt werden kann, so dass aus einer erkannten Lage des Hilfselements 3 auf die Lage des Manipulierimplantats 2 und/oder des Implantats 10 zurückgeschlossen werden kann.

In Figur 2 ist ein Modell des Restzahnbereichs 7 gezeigt, wobei allerdings auf das Manipulierimplantat 2 kein Hilfselement aufgesetzt ist. Auch hier kann ein Datensatz 8, der die Geometrie dieses Modells 7 beschreibt, mit der Erfassungsvorrichtung 5 ermittelt werden, wobei der Datensatz 8 weitergeleitet, verarbeitet oder gespeichert werden kann. Aus diesem Datensatz 8 kann die Lage des oberen Endes eines Manipulierimplantats in etwa ermittelt werden. Die Information reicht in der Regel nicht aus die genaue Lage des Manipulierimplantats 2 exakt zu bestimmen, jedoch kann die Lage des oberen Endes mit ausreichender Genauigkeit bestimmt werden. Mit beispielsweise dieser Information sowie beispielsweise mit den Daten der Form des Restzahnbereichs, wie Anordnung und/oder Größe der Nachbarzähne, kann beispielsweise die Einschubrichtung definiert werden, unter der ein Zahnersatzteil auf ein Abutment geschoben werden kann, wobei das Abutment auf das Implantat aufgesetzt sein kann.

Figur 3 zeigt den Restzahnbereich 9 eines Patienten, wobei der Bereich im gezeigten Fall mehrere Zähne sowie ein Implantat 10 umfasst, auf das ein Hilfselement 3 aufgebracht ist. Der Restzahnbereich 9 kann mit einer Erfassungseinheit 5 erfasst werden, wobei diese Erfassungseinheit gleich der Erfassungseinheit zum Erfassen der Modelle sein kann; die beiden Erfassungseinheiten können aber auch verschieden sein. Der ermittelte Datensatz 12 kann weitergeleitet, verarbeitet und/oder gespeichert werden. Das Implantat 10 im Kiefer des Patienten kann eine Längsachse 11 aufweisen. Die Lage des Implantats kann ungefähr aus dem oberen Ende des Implantats bestimmt werden kann.

In Figur 4 ist ein Restzahnbereich 13 des Patienten gezeigt, wobei auf das Implantat 10 kein Hilfselement aufgebracht ist. Die Geometrie dieses Restzahnbereichs 13 kann mit einer Erfassungseinheit 5 erfasst werden, und der so erhaltene Datensatz 14 kann weitergeleitet, verarbeitet und/oder gespeichert werden.

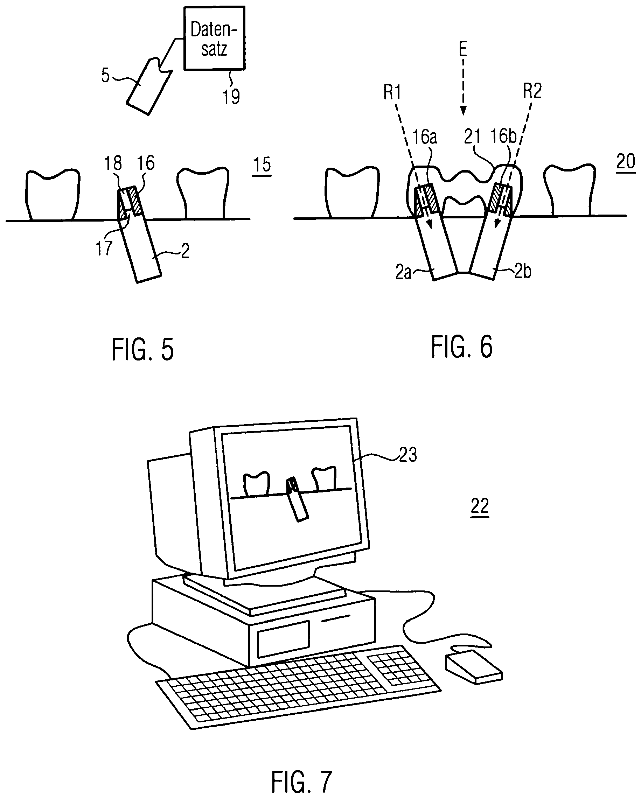

Figur 5 stellt ein Modell eines Restzahnbereichs 15 dar, auf dessen Manipulierimplantat 2 ein Abutment 16 aufgesetzt ist. Das Abutment 16 kann einen Schraubenkanal 18 aufweisen, um Abutment 16 und (Manipulier-)Implantat 2, 10 beispielsweise mittels einer Schraube zu verbinden. Die Längsachse des Schraubenkanals kann der Achse des Manipulierimplantats 4 und der Achse des Implantats 11 entsprechen, damit Abutment 16 und Manipulierimplantat 2 und/oder Abutment 16 und Implantat 10 ohne Spannungen, die beispielsweise durch eine verkantete Schraube hervorgerufen werden können, miteinander verbunden werden können. Die Längsachse des Schraubenkanals und die Achse des Implantats 11 können aber auch geneigt zueinander oder windschief zu einander sein. Hierzu können Adapter zwischen Implantat und Abutment eingesetzt werden.

Eine Außenform eines Abutments 16 kann unter Verwendung des Datensatzes 8 ermittelt werden, der die Geometrie des entsprechenden Modells ohne aufgesetzte Hilfselemente beschreibt (siehe Figur 2). Die mögliche Außenform eines Abutments 16 kann beschränkt werden durch Anordnung benachbarter Zähne, eine Richtung, unter der das Abutment 16 auf das Manipulierimplantat 2 und/oder Implantat 10 aufgesetzt werden soll oder die Möglichkeit des Einsetzens einer Schraube in den Schraubenkanal 18 und/oder deren Befestigung im Manipulierimplantat 2 und/oder Implantat 10. Die Außenform eines Abutments 16 kann auch durch eine oder mehrere Charakteristiken eines aufzuschiebenden Zahnersatzteils bedingt sein. Solche Charakteristiken können beispielsweise Einschubrichtung des Zahnersatzteils, minimale Dicke des Materials des Zahnersatzteils oder vorhandene Hinterschnitte des Zahnersatzteils sein.

Manipulierimplantat 2 und Implantat 10 sowie das Abutment 16 können Anschlussgeometrien 7 an ihren Enden aufweisen, die gewährleisten, dass die Teile entsprechend gegeneinander positioniert werden können und beispielsweise ein Verdrehen des Abutments 16 auf dem Manipulierimplantat 2 und/oder Implantat 10 verhindert werden kann.

In Figur 6 ist ein Modell eines Restzahnbereichs 20 mit zwei Manipulierimplantaten 2a, 2b und mit aufgesetzten Abutments 16a, 16b dargestellt. Auf die Abutments 16a, 16b ist eine dreigliedrige Brücke 21 mit einem Pontic aufgesetzt. Die Manipulierimplantate 2a, 2b weisen verschiedene Ausrichtungen aus. Die Außenform der Abutments 16a, 16b kann unter Beachtung der Ausrichtung und Lage der Manipulierimplantate 2a, 2b und/oder der entsprechenden Implantate so definiert werden, dass die zwei Richtungen R1, R2, die durch die Längsachsen der Manipulierimplantate und/oder der Implantate gegeben sind, in eine einzelne Einschubrichtung transformiert werden. Dadurch ist es möglich, ein mehrgliedriges Zahnersatzteil 21 unter einer einzelnen Einschubrichtung E auf die entsprechenden Abutments 16a, 16b aufzuschieben. Das Zahnersatzteil 21 kann beispielsweise noch eine Verblendung erhalten, um farblich und der Form nach den Zähnen im Mund eines Patienten zu entsprechen.

Figur 7 stellt ein System 22 zum Modellieren eines individuellen Zahnersatzes dar. Mit einem Computer können ein oder mehrere Datensätze 6, 8, 12, 14, 19 eingelesen werden, wie beispielsweise die Datensätze, die die Geometrie der Modelle eines Restzahnbereichs mit und ohne Hilfselements beschreiben. Zudem kann der Datensatz, der den Restzahnbereich des Patienten beschreibt, eingelesen werden. Die Datensätze können verarbeitet werden, und entsprechende Ansichten eines Modells und/oder Restzahnbereichs können beispielsweise auf einem Bildschirm 23 dargestellt werden. Eine Bearbeitung der Daten ist möglich. Dabei können Bearbeitungsschritte durch einen Anwender mittels einer Tastatur, einer Maus oder auch durch Audiosignale ausgewählt und/oder ausgeführt werden. Die Bearbeitungsschritte können auch automatisch unter Verwendung vordefinierter Merkmale, wie beispielsweise zu verwendende Materialien oder festgelegte Geometrien, ausgeführt werden. Die bearbeiteten Datensätze können gespeichert und/oder verschickt werden, sodass die Herstellung eines Abutments und/oder eines Zahnersatzteils am Ort der Bearbeitung stattfinden kann oder dass die Herstellung beispielsweise in einem Fertigungszentrum erfolgen kann.

Ein Verfahren zum Modellieren eines Abutments 16 kann also wie folgt ablaufen. Das Modell 1, 7 wird einmal mit und einmal ohne Hilfselemente 3 abgescannt (siehe Figuren 1 und 2), wobei die Reihenfolge beliebig ist. Aus den Daten 8, 14 ohne Hilfselemente 3 kann, beispielsweise wie oben beschrieben, die Einschubrichtung E bestimmt werden. Dazu können die Daten beispielsweise einfach dargestellt werden zusammen mit einer möglichen Einschubrichtung E, die beispielsweise als Linie dargestellt wird. Die Daten können auch als Oberfläche aus Sicht der Einschubrichtung E, also mit Blick entlang der Einschubrichtung auf die Modelloberfläche dargestellt werden. Die Einschubrichtung E bzw. der Blick auf die Daten wird dann per Bedienereingaben modifiziert, bis der Bediener mit der gewählten Einschubrichtung E einverstanden ist.

Das Verfahren zum Modellieren eines Abutments 16 kann aber auch unter Verwendung der Datensätze 12, 14 durchgeführt werden, welche die dreidimensionale Geometrie des Restzahnbereichs mit Implantat und mit aufgebrachtem Hilfselement bzw. die dreidimensionale Geometrie des Restzahnbereichs mit Implantat aber ohne Hilfselement umfassen. Auch kann unter Verwendung dieser Datensätze 12, 14 die Einschubrichtung E bestimmt werden.

Dann kann mit oder ohne zu Hilfenahme dieser Einschubrichtung E der Außenbereich des Abutments 16 modelliert werden. Hierzu wird z.B. ein Kegelmantelstumpf um die Richtung der Einschubrichtung E vorgeschlagen. Ein solcher Vorschlag kann mit geeigneten Mitteln in dem datenmäßigen Modell noch von einem Anwender modifiziert werden. Das Modell des Abutments 16 kann hierbei so unter Berücksichtigung des Datensatzes ohne Hilfskörper modelliert werden, dass das Abutment zu den anderen Nachbarzähnen bzw. allgemein zu dem Restzahnbereich passt. Hierbei wird die ungefähre Information über die Lage des oberen Endes des (Manipulier-)Implantats 2, 10 ausgenutzt, die aus dem Datensatz 8, 14 ohne Hilfskörper 3 gewonnen wurde, um das Abutment 16 so zu formen, dass es auch auf dem (Manipulier-)Implantat 2, 10 befestigt werden kann.

Zur Fertigstellung des Datensatzes, der das Abutment 16 beschreibt wird nun noch die Unterseite und der Schraubenkanal 18 modelliert. Dazu kann z.B. der bereits erzeugte Datensatz des Abutments 16 in eine Darstellung des Datensatzes mit Hilfskörpern 3 eingeblendet werden. Beispielsweise kann die relative Lage des geplanten Abutments 16 im Vergleich zu den Nachbarzähnen bzw. dem Restzahnbereich dazu genutzt werden, da diese Daten in beiden Datensätzen 6, 8, 12, 14 (mit und ohne Hilfskörper) gleichermaßen vorhanden sind. Aus dem Datensatz 6, 12 mit Hilfskörpern 3 sind die genaue Lagen der (Manipulier-)Implantate 2, 10 bekannt, so dass der Schraubenkanal 18 vorzugsweise entlang der Implantatsachsen ausgebildet wird und die Information über die genaue Lage des (Manipulier-)Implantats 2, 10 dazu verwendet wird, die Unterseite des Abutments 16 entsprechend zu formen. Damit lässt sich ein Abutment 16 erstellen, dessen Außenform optimal geformt werden kann, da in dem entsprechenden Datensatz 8, 14 keine störenden Hilfskörper Abschattungen hervorrufen und bei dem andererseits die Unterseite mit der benötigen Präzision modelliert werden kann, da ein Datensatz mit Hilfskörpern zu Verfügung steht.

Der Datensatz eines so modellierten Abutments kann dann an eine Fertigungsstation bzw. ein Fertigungszentrum beispielsweise per Datenfernübertragung zu Herstellung des Abutments verschickt werden.

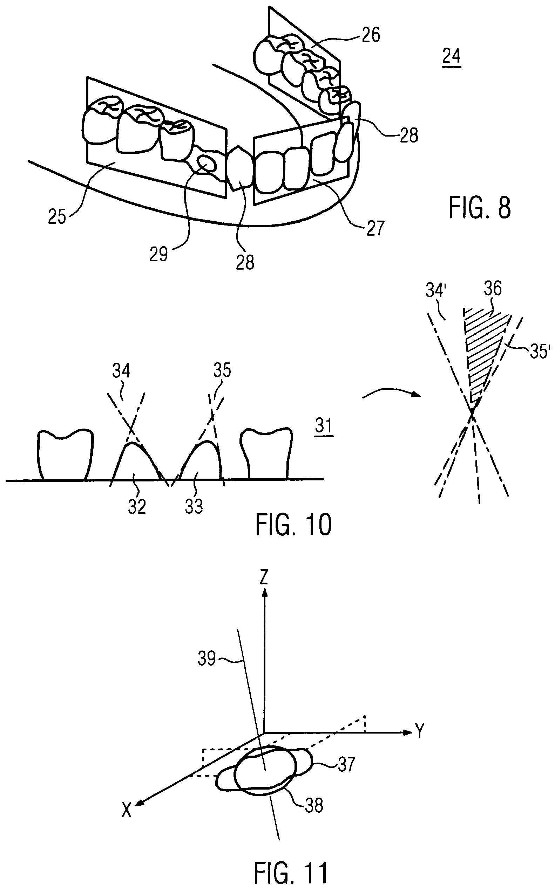

Figur 8 zeigt eine schematische Darstellung eines Kieferbogens mit Zahnlücke 29. Der Kieferbogen 24 kann in drei Bereiche unterteilt werden, beispielsweise wie hier gezeigt in zwei Bereiche von Backenzähnen 25 , 26 und einen Schneidezahnbereich 27. Die Eckzähne 28 sind hier keinem der drei Bereiche zugeordnet, können aber beispielsweise dem Schneidezahnbereich oder den entsprechenden Bereichen der Backenzähne zugeordnet sein. Es ist auch möglich, den Eckzähnen jeweils eigene Bereiche zuzuordnen. In die Zahnlücke können ein Implantat und ein Abutment eingebracht werden und/oder eingebracht sein, auf die dann ein Zahnersatzteil aufgesetzt werden kann. Eine mögliche Einschubrichtung für das Zahnersatzteil kann dadurch bestimmt werden, dass drei von Kiefer abstehende Punkte ausgewählt werden und durch diese Punkte dann eine Ebene gelegt wird, wobei die Senkrechte der Ebene die mögliche Einschubrichtung definieren kann.

Für eine Auswahl der Punkte kann vorgesehen sein, dass:
- jeweils ein Punkt aus jeweils einem der drei dargestellten Bereiche ausgewählt werden kann, wobei der jeweilige Punkt, der am weitesten von dem Kiefer abstehende sein kann. Die am weitesten abstehenden Punkte können durch Zahnspitzen gegeben sein oder auch durch Zahnfleischerhöhungen, wenn im Kiefer oder in einem Kieferbereich keine Zähne mehr vorhanden sind.
- die drei ausgewählten Punkte jeweils einen Mindestabstand zueinander aufweisen.

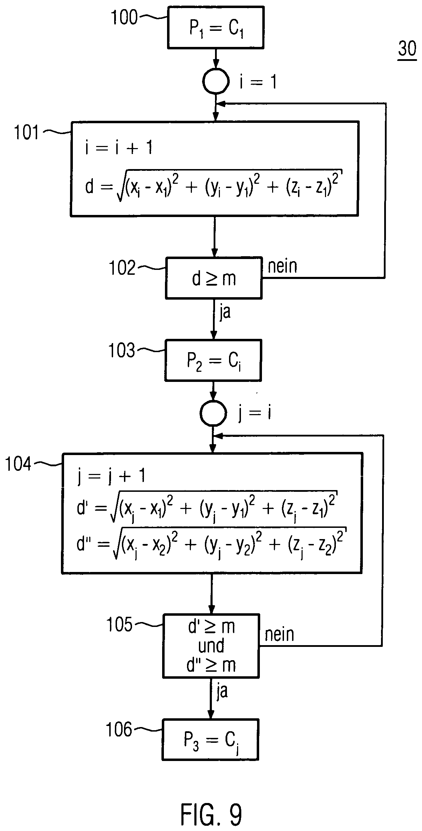

In Figur 9 ist ein Ablaufdiagramm für die Auswahl von vom Kiefer abstehender Punkte dargestellt. Es kann eine Datenbank zur Verfügung stehen (nicht dargestellt), welche die Koordinaten von solchen Punkten enthält, die vom Kiefer abstehen. Beispielsweise können die Punkte so sortiert sein, dass die Punkte Cᵢ mit einem höheren Index i weniger weit vom Kiefer abstehen als solche Punkte Cᵢ mit einem höheren Indexwert i. Im Schritt 100 wird als erster Punkt P₁ der am weitesten vom Kiefer abstehende Punkt Cᵢ₌₁ ausgewählt.

Für den nächsten Punkt Cᵢ₌₂ wird in Schritt 101 der Abstand d zwischen dem ersten Punkt P₁ und dem Punkt Cᵢ₌₂ bestimmt. Im Schritt 102 wird überprüft, ob der Abstand d zwischen dem ersten Punkt P₁ und dem Punkt Cᵢ₌₂ größer oder gleich einem Mindestabstand m ist. Der Mindestabstand kann beispielsweise 1 cm, 1,5 cm, 2 cm, 2,5 cm oder mehr betragen. Der Mindestabstand kann aber auch kleiner sein.

Ist d größer oder gleich m, so wird in Schritt 103 als zweiter Punkt P₂ der Punkt Cᵢ₌₂ ausgewählt. Ist der Abstand d kleiner als der Mindestabstand m, so werden die Schritte 101 und 102 wiederholt, bis ein Punkt Cᵢ gefunden wird, für den der Abstand d größer oder gleich dem Mindestabstand m ist. Sollte kein solcher Punkt gefunden werden, kann ein automatischer Hinweis erfolgen. Der Hinweis kann beispielsweise beinhalten, dass kein zweiter Punkt ausgewählt werden konnte und entsprechend die Auswahl von Punkten beendet werden musste.

Wurde in Schritt 103 dem zweiten Punkt P₂ ein Punkt Cᵢ zugewiesen, so wird für den nächsten Punkt Cⱼ₌ᵢ₊₁ im Schritt 104 jeweils der Anstand d' zum ersten Punkt P₁ und der Abstand d" zum zweiten Punkt P₂ berechnet. Im Schritt 105 wird überprüft, ob die Abstände d' und d" größer oder gleich dem Mindestabstand m sind.

Ist dies der Fall, so wird in Schritt 106 als dritter Punkt P₃ der Punkt Cⱼ ausgewählt. Sind die Abstände d' und/oder d" kleiner als der Mindestabstand m, so werden die Schritte 104 und 105 wiederholt, bis ein Punkt Cⱼ gefunden wird, für den die Abstände d' und d" größer oder gleich dem Mindestabstand m sind. Sollte kein solcher Punkt gefunden werden, kann ein automatischer Hinweis erfolgen. Der Hinweis kann beispielsweise beinhalten, dass kein dritter Punkt ausgewählt werden konnte und entsprechend die Auswahl von Punkten beendet werden musste.

Figur 10 zeigt schematisch die Bestimmung einer Einschubrichtung für ein Zahnersatzteil auf zwei beschliffene Zähne 32, 33, wobei für die Einschubrichtung die Schnittmenge 36 zweier Öffnungswinkel von Kegeln 34, 34', 35, 35' berücksichtigt wird. Um einen Kegel um einen beschliffenen Zahn 32, 33 herum festzulegen, können an Kanten des beschliffenen Zahns drei oder mehr Tangenten gelegt werden, um einen Kegelmantel festzulegen, der den beschliffenen Zahn umgibt. Bei zwei beschliffenen Zähnen können sich entsprechend zwei Kegelmäntel mit verschiedenen Öffnungswinkeln und/oder verschiedenen Richtungen der Kegelachsen ergeben. Eine Einschubrichtung für das Zahnersatzteil kann sich dann aus der Schnittmenge 36 der beiden Öffnungswinkel 34, 34', 35, 35' ergeben.

Ein Kegelmantel kann beispielsweise auch um ein Abutment gelegt werden, wobei der Öffnungswinkel des Kegels eine Einschubrichtung für ein Zahnersatzteil festlegen kann. Bei mehreren Abutments und/oder bei einer Kombination von einem und/oder mehreren Abutments und/oder von einem und/oder mehreren beschliffenen Zähnen kann die Einschubrichtung des Zahnersatzteils aus der Schnittmenge der entsprechenden Öffnungswinkel der Kegel bestimmt werden.

Eine Einschubrichtung eines Zahnersatzteils kann beispielsweise durch die Richtung einer Achse eines beschliffenen Zahns definiert werden. Dabei kann die Richtung der Achse des beschliffenen Zahns beispielsweise durch die Senkrechte einer Äquatorfläche des beschliffenen Zahns gegeben sein, wobei die Äquatorfläche durch die Linie des größten, annähernd horizontalen Umfangs des beschliffenen Zahns definiert ist. Die Äquatorlinie und entsprechend die Äquatorfläche werden im allgemeinen nicht in einer Ebene verlaufen, sondern beispielsweise eine gewellte Form aufweisen, welche die äußere Struktur des beschliffenen Zahns wiedergibt.

In Figur 11 ist eine Äquatorlinie 37 eines Zahns zusammen mit einer an die Äquatorlinie gefitteten Kreislinie 38 gezeigt. Durch den Fit der Kreislinie erhält man eine Kreisebene, welche den Verlauf der Äquatorlinie annähernd beschreibt und die in einer Ebene verläuft. Die Senkrechte 39 der Kreisebene kann dann als eine mögliche Einschubrichtung für ein Zahnersatzteil verwendet werden.

## Patentansprüche

1. Verfahren zum Modellieren eines individuellen Zahnersatzes, der ein Abutment umfasst, mit den Schritten:
a) auf einem, mehreren oder jedem Implantat (10) in einem Restzahnbereich (9) eines Patienten, der mit dem Zahnersatz versehen werden soll, wird ein Hilfselement (3) angebracht, das zusammen mit dem Implantat (10) dessen Lage im Restzahnbereich (9) wiedergibt;
b) mittels einer Erfassungsvorrichtung (5) wird eine erste dreidimensionale Geometrie des Restzahnbereichs (9) mit dem mindestens einen Hilfselement (3) erfasst und daraus ein erster Datensatz (12) ermittelt, welcher die erste dreidimensionale Geometrie beschreibt;
**dadurch gekennzeichnet, dass**
c) mittels der Erfassungsvorrichtung (5) eine zweite dreidimensionale Geometrie des Restzahnbereichs mit dem mindestens einen Implantat (10) jedoch ohne das Hilfselement erfasst wird und daraus ein zweiter Datensatz (14) ermittelt wird, welcher die zweite dreidimensionale Geometrie beschreibt, wobei unter Benutzung des zweiten Datensatzes (14) oder unter Benutzung des ersten Datensatzes (12) und des zweiten Datensatzes (14) eine Einschubrichtung ermittelt wird, unter der ein Zahnersatzteil (21) auf das Abutment (16, 16a, 16b) geschoben werden soll, wobei mittels des ersten Datensatzes (12) die Lage des Implantats (10) in dem Restzahnbereich (9) des Patienten durch das angebrachte Hilfselement (3) genau bestimmt wird und mittels des zweiten Datensatzes (14) gewährleistet wird, dass alle Bereiche des Restzahnbereichs (9) in dem zweiten Datensatz (14) wiedergegeben sind.

2. Verfahren nach Anspruch 1, **dadurch gekennzeichnet, dass** das Zahnersatzteil (21) ein Overlay, ein Onlay, ein Käppchen, eine Krone, eine Primärkrone, eine Sekundärkrone, eine Brücke oder ein Gerüst ist oder umfasst und/oder
den Schritt d) des Ermittelns von Abutmentdaten, die das Abutment (16, 16a, 16b) definieren, wobei vorzugsweise
der Schritt des Ermittelns von Abutmentdaten die Ermittlung einer Anschlussgeometrie (18) des Abutments (16, 16a, 16b) an das Implantat (10) im Restzahnbereich umfasst.

3. Verfahren nach einem der Ansprüche 1 bis 2, **dadurch gekennzeichnet, dass** unter Verwendung des ersten Datensatzes (12) eine Richtung, unter der das Abutment (16, 16a, 16b) auf das Implantat (10) aufgesetzt wird, bestimmt wird und/oder
ein Schraubenkanal (18) in dem Abutment (16, 16a, 16b) modelliert wird, wobei die Längsachse des Schraubenkanals einer Achse des Implantats (10) im Restzahnbereich (9) entspricht, wobei hierfür vorzugsweise unter anderem oder ausschließlich auf den ersten Datensatz (12) zurückgegriffen wird, wobei vorzugsweise
weiterhin überprüft wird, ob eine Schraube in den Schraubenkanal (18) des Abutments (16, 16a, 16b) einsetzbar ist, wenn das Abutment (16, 16a, 16b) auf das Implantat (10) im Restzahnbereich (9) aufgesetzt ist.

4. Verfahren nach einem der Ansprüche 1 bis 3, **dadurch gekennzeichnet, dass** eine Außenform des Abutments (16, 16a, 16b) mittels des zweiten Datensatzes (14) bestimmt wird und/oder
die Aufsetzbarkeit des Abutments (16, 16a, 16b) auf das Implantat (10) im Restzahnbereich (9) überprüft wird und/oder
unter Berücksichtigung der Außenform des Abutments (16, 16a, 16b) eine Innenform des Zahnersatzteils (21) bestimmt wird.

5. Verfahren zum Herstellen eines individuellen Zahnersatzes, der ein Abutment (16, 16a, 16b) umfasst,
**dadurch gekennzeichnet, dass**
eine Modellierung des individuellen Zahnersatzes gemäß jeglicher der Ansprüche 2 bis 4 erfolgt.

6. Verfahren nach Anspruch 5, **dadurch gekennzeichnet, dass** die Herstellung des Abutments (16, 16a, 16b) und/oder des Zahnersatzteils (21) mittels Fräsens aus einem vorkonfektionierten Rohling und/oder aus einem beliebig geformten Rohling wie etwa aus einer Platte erfolgt, wobei vorzugsweise
der Rohling ein ungesinterter, ein vorgesinterter oder ein durchgesinterter Keramikrohling, ein Metallrohling oder ein Kunststoffrohling ist oder umfasst und/oder
als Werkstoffe für das Abutment und/oder das Zahnersatzteil Metall, Keramik, Glas oder Kunststoff verwendet wird.

7. Computersystem zum Modellieren eines individuellen Zahnersatzes, der ein Abutment (16, 16a, 16b) umfasst, wobei Mittel vorgesehen sind,
um einen ersten Datensatz (12) zu erfassen, der eine erste dreidimensionale Geometrie beschreibt, wobei diese Geometrie einen Restzahnbereich (9), der mit einem Zahnersatz versehen werden soll, sowie mindestens ein Implantat (10), auf dem ein Hilfselement (3) angebracht ist, umfasst, und
um einen zweiten Datensatz (14) zu erfassen, der eine zweite dreidimensionale Geometrie beschreibt, wobei diese Geometrie den Restzahnbereich (13), der mit einem Zahnersatz versehen werden soll, sowie mindestens ein Implantat (10), auf dem kein Hilfselement angebracht ist, umfasst
**dadurch gekennzeichnet, dass**
ein Mittel, insbesondere Software, vorgesehen ist, mit dem unter Benutzung des zweiten Datensatzes (14) oder unter Benutzung des ersten Datensatzes (12) und des zweiten Datensatzes (14) eine Einschubrichtung ermittelt werden kann, unter der ein Zahnersatzteil (21) auf das Abutment (16, 16a, 16b) geschoben werden soll, wobei mittels des ersten Datensatzes (12) die Lage des Implantats (10) in dem Restzahnbereich (9) des Patienten durch das angebrachte Hilfselement (3) genau bestimmbar ist und mittels des zweiten Datensatzes (14) gewährleistbar ist, dass alle Bereiche des Restzahnbereichs (9) in dem zweiten Datensatz (14) wiedergegeben sind.

8. Computersystem nach Anspruch 9, **dadurch gekennzeichnet, dass** das Computersystem eine Herstelleinrichtung umfasst, welche die Verfahrensschritte gemäß jeglicher der Ansprüche 1 bis 4 ausführen kann.

9. Computerlesbares Medium mit Instruktionen, die in einen Computer geladen ein Verfahren nach einem der Ansprüche 1 bis 4 oder nach einem der Ansprüche 5 bis 6 ausführen.

## Claims

1. Method for modelling an individual dental prosthesis that comprises an abutment, with the steps:
a) an auxiliary element (3) is affixed to one, several or each implant (10) in a residual tooth area (9) of a patient that is to be provided with a dental prosthesis, wherein the auxiliary element (3), together with the implant (10), describes the position of the implant (10) in the residual tooth area (9);
b) a first three-dimensional geometry of the residual tooth area (9) with the at least one auxiliary element (3) is ascertained by means of a detection device (5), and a first data set (12) is determined therefrom, wherein the first data set (12) describes the first three-dimensional geometry;
**characterised in that**
c) a second three-dimensional geometry of the residual tooth area with the at least one implant (10) but without, however, the auxiliary element, is ascertained by means of the detection device (5), and a second data set (14) is determined therefrom, wherein the second data set (14) describes the second three-dimensional geometry, wherein by using the second data set (14) or by using the first data set (12) and the second data set (14), a direction of insertion is determined by which the dental prosthesis part (21) is to be pushed onto the abutment (16, 16a, 16b), wherein by the first data set (12) the position of the implant (10) in the residual tooth area (9) of the patient is determined exactly by the affixed auxiliary element (3) and by the second data set (14) it is guaranteed that all areas of the residual tooth area (9) are described in the second data set (14).

2. Method according to claim 1, **characterised in that** the dental prosthesis part (21) is or comprises an overlay, onlay, cap, crown, primary crown, secondary crown, bridge or framework and/or
the step d) for determining abutment data that define the abutment (16, 16a, 16b), wherein preferably
the step of determining abutment data comprises the determination of a connection geometry (18) of the abutment (16, 16a, 16b) at the implant (10) in the residual tooth area.

3. Method according to one of the claims 1 to 2, **characterized in that** a direction by which the abutment (16, 16a, 16b) is affixed onto the implant (10) is determined by using the first data set (12) and/or
a screw channel (18) is modelled in the abutment (16, 16a, 16b), wherein the longitudinal axis of the screw channel corresponds to an axis of the implant (10) in the residual tooth area (9), wherein preferably the first data set (12) is also or exclusively accessed for this, wherein preferably
there is furthermore a check of whether or not a screw is insertable into the screw channel (18) of the abutment (16, 16a, 16b) if the abutment (16, 16a, 16b) is affixed onto the implant (10) in the residual tooth area.

4. Method according to one of the claims 1 to 3, **characterized in that** an outer shape of the abutment (16, 16a, 16b) is determined by means of the second data set (14) and/or
the affixability of the abutment (16, 16a, 16b) onto the implant (10) in the residual tooth area (9) is checked and/or
an inner shape of the dental prosthesis part (21) is determined with consideration given to the outer shape of the abutment (16, 16a, 16b).

5. Method for the production of an individual dental prosthesis part that comprises an abutment (16, 16a, 16b),
**characterised in that**
modelling of the individual dental prosthesis takes place according to any of the claims 2 to 4.

6. Method according to claim 5, **characterized in that** the production of the abutment (16, 16a, 16b) and/or of the dental prosthesis part (21) takes place by means of milling from a premanufactured blank and/or from a shaped blank with any shape, such as, for instance, a plate, wherein preferably
the blank is or comprises an unsintered, a pre-sintered or a sintered-through ceramic blank, a metal blank or a plastic blank and/or
metal, ceramic, glass or plastic is used as material for the abutment and/or the dental prosthesis part.

7. Computersystem for modelling an individual dental prosthesis that comprises an abutment (16, 16a, 16b), wherein means are provided
in order to ascertain a first data set (12) that describes a first three-dimensional geometry, wherein this geometry comprises a residual tooth area (9) that is to be provided with a dental prosthesis, as well as at least one implant (10) onto which an auxiliary element (3) is affixed and
in order to ascertain a second data set (14) that describes a second three-dimensional geometry, wherein this geometry comprises the residual tooth area (13) that is to be provided with a dental prosthesis, as well as at least one implant (10) onto which no auxiliary element is affixed
**characterised in that**
a means, in particular software, is provided with which, by using the second data set (14) or by using the first data set (12) and the second data set (14), a direction of insertion can be determined by which a dental prosthesis part (21) is to be pushed onto the abutment (16, 16a, 16b), wherein by the first data set (12) the position of the implant (10) in the residual tooth area (9) of the patient is determined exactly by the affixed auxiliary element (3) and by the second data set (14) it is guaranteed that all areas of the residual tooth area (9) are described in the second data set (14).

8. Computersystem according to claim 7, **characterised in that** the computersystem comprises a production device which can execute the steps of the method according to any of the claims 1 to 4.

9. Computer-readable medium with instructions that when loaded into a computer execute a method according to one of the claims 1 to 4 or according to one of the claims 5 to 6.

## Revendications

1. Procédé de modélisation d'une prothèse dentaire individuelle, qui comprend un pilier, le procédé comportant les étapes suivantes :
a) sur un, plusieurs ou chaque implant (10) dans une zone dentaire résiduelle (9) d'un patient, qui doit être pourvu de la prothèse dentaire, on place un élément auxiliaire d'aide (3), qui, en commun avec l'implant (10), reproduit la position de celui-ci dans la zone dentaire résiduelle (9) ;
b) au moyen d'un dispositif d'acquisition (5), on relève une première géométrie tridimensionnelle de la zone dentaire résiduelle (9) avec ledit au moins un élément auxiliaire d'aide (3), et on en déduit un premier jeu de données (12), qui décrit la première géométrie tridimensionnelle ;
**caractérisé**
c) en ce qu'au moyen du dispositif d'acquisition (5), on relève une deuxième géométrie tridimensionnelle de la zone dentaire résiduelle avec ledit au moins un implant (10), mais sans ledit élément auxiliaire d'aide, et on en déduit un deuxième jeu de données (14), qui décrit la deuxième géométrie tridimensionnelle, en ce que par l'utilisation du deuxième jeu de données (14) ou par l'utilisation du premier jeu de données (12) et du deuxième jeu de données (14), on détermine une direction d'insertion sous laquelle une pièce de prothèse dentaire (21) doit être engagée sur le pilier (16, 16a, 16b), et en ce qu'à l'aide du premier jeu de données (12), on détermine de manière exacte la position de l'implant (10) dans la zone dentaire résiduelle (9) du patient, grâce à l'élément auxiliaire d'aide (3) en place, et à l'aide du deuxième jeu de données (14), on garantit que toutes les zones de la zone dentaire résiduelle (9) soient reproduites dans le deuxième jeu de données (14) .

2. Procédé selon la revendication 1, **caractérisé en ce que** la pièce de prothèse dentaire (21) est ou comprend un overlay, un onlay, un cabochon, une couronne, une couronne primaire, une couronne secondaire, un bridge ou une structure, et/ou **caractérisé**
**par** l'étape d) de la détermination de données de pilier, qui définissent le pilier (16, 16a, 16b),
l'étape de la détermination de données de pilier comprenant de préférence la détermination d'une géométrie de raccordement (18) du pilier (16, 16a, 16b) à l'implant (10) dans la zone dentaire résiduelle.

3. Procédé selon l'une des revendications 1 à 2,
**caractérisé en ce qu'**en utilisant le premier jeu de données (12), on détermine une direction selon laquelle le pilier (16, 16a, 16b) est engagé sur l'implant (10), et/ou
on modélise un canal de vis (18) dans le pilier (16, 16a, 16b), l'axe longitudinal du canal de vis correspondant à un axe de l'implant (10) dans la zone dentaire résiduelle (9), en se référant à cet effet, de préférence, entre autres ou exclusivement au premier jeu de données (12), et
on vérifie par ailleurs, de préférence, si une vis peut être insérée dans le canal de vis (18) du pilier (16, 16a, 16b) lorsque le pilier (16, 16a, 16b) est placé sur l'implant (10) dans la zone dentaire résiduelle (9).

4. Procédé selon l'une des revendications 1 à 3,
**caractérisé en ce que** l'on détermine une forme extérieure du pilier (16, 16a, 16b) au moyen du deuxième jeu de données (14), et/ou
on vérifie la possibilité d'engagement du pilier (16, 16a, 16b) sur l'implant (10) dans la zone dentaire résiduelle (9), et/ou
on détermine une forme intérieure de la pièce de prothèse dentaire (21), en tenant compte de la forme extérieure du pilier (16, 16a, 16b).

5. Procédé de fabrication d'une prothèse dentaire individuelle, qui comprend un pilier (16, 16a, 16b),
**caractérisé**
**en ce que** l'on effectue une modélisation de la prothèse dentaire individuelle selon l'ensemble de toutes les revendications 2 à 4.

6. Procédé selon la revendication 5, **caractérisé en ce que** la fabrication du pilier (16, 16a, 16b) et/ou de la pièce de prothèse dentaire (21) est effectuée par fraisage à partir d'une ébauche pré-confectionnée et/ou d'une ébauche d'une forme ou configuration quelconque, comme par exemple à partir d'une plaque,
l'ébauche étant ou comprenant de préférence une ébauche céramique non frittée, pré-frittée ou frittée à coeur, une ébauche métallique ou une ébauche en matière plastique, et/ou
on utilise en guise de matériaux pour le pilier et/ou la pièce de prothèse dentaire, du métal, de la céramique, du verre ou de la matière plastique.

7. Système informatique d'ordinateur pour la modélisation d'une prothèse dentaire individuelle, qui comprend un pilier (16, 16a, 16b), des moyens étant prévus
pour relever un premier jeu de données (12), qui décrit une première géométrie tridimensionnelle, cette géométrie englobant une zone dentaire résiduelle (9), qui doit être pourvue d'une prothèse dentaire, ainsi qu'au moins un implant (10) sur lequel est placé un élément auxiliaire d'aide (3), et
pour relever un deuxième jeu de données (14), qui décrit une deuxième géométrie tridimensionnelle, cette géométrie englobant la zone dentaire résiduelle (9), qui doit être pourvue d'une prothèse dentaire, ainsi qu'au moins un implant (10) sur lequel n'a pas été placé d'élément auxiliaire d'aide,
**caractérisé**
**en ce qu'**il est prévu un moyen, notamment un logiciel, à l'aide duquel il est possible de déterminer, en utilisant le deuxième jeu de données (14) ou en utilisant le premier jeu de données (12) et le deuxième jeu de données (14), une direction d'insertion sous laquelle une pièce de prothèse dentaire (21) doit être engagée sur le pilier (16, 16a, 16b), et en ce qu'à l'aide du premier jeu de données (12), il est possible de déterminer de manière exacte la position de l'implant (10) dans la zone dentaire résiduelle (9) du patient, grâce à l'élément auxiliaire d'aide (3) en place, et à l'aide du deuxième jeu de données (14), il est possible de garantir que toutes les zones de la zone dentaire résiduelle (9) soient reproduites dans le deuxième jeu de données (14).

8. Système informatique d'ordinateur selon la revendication 7, **caractérisé en ce que** le système informatique d'ordinateur comprend un dispositif de fabrication, qui est en mesure d'exécuter toutes les étapes de procédé selon l'ensemble de toutes les revendications 1 à 4.

9. Moyen pouvant être lu par un ordinateur, comprenant des instructions, qui, chargées dans un ordinateur, exécutent un procédé selon l'une des revendications 1 à 4 et selon l'une des revendications 5 à 6.
